# EUROPÄISCHE PATENTSCHRIFT

(11) **EP 0 691 528 B1**
(45) Veröffentlichungstag und Bekanntmachung des Hinweises auf die Patenterteilung: **23.01.2002**
(21) Anmeldenummer: 95109986.0
(22) Anmeldetag: 27.06.1995
(51) Int. Cl.: G01F 1/84

(54) **Massendurchflussmessgerät**
Mass flowmeter
Débitmètre massique

(30) Priorität: 04.07.1994 DE 4423168
(43) Veröffentlichungstag der Anmeldung: 10.01.1996
(73) Patentinhaber: Krohne AG, 4019 Basel (CH)
(72) Erfinder: van der Pol, Ronald, Dipl.-Ing., NL-5824 AK Venlo (NL)
(74) Vertreter: Patentanwälte Gesthuysen, von Rohr, Weidener, Häckel

(56) Entgegenhaltungen:
- EP-A- 0 212 782
- EP-A- 0 272 758
- WO-A-88/02105
- WO-A-93/22629
- DE-A- 4 327 052

## Beschreibung

Die Erfindung betrifft ein Massendurchflußmeßgerät für strömende Medien, das nach dem Coriolis-Prinzip arbeitet, mit mindestens einer das strömende Medium führenden Coriolis-Leitung, mit mindestens einem die Coriolis-Leitung mit einer Anregungsleistung anregenden Schwingungserzeuger, mit mindestens zwei auf Coriolis-Kräften beruhende Coriolis-Schwingungen erfassenden Meßwertaufnehmem und mit einer den Schwingungserzeuger ansteuernden und die Meßsignale der Meßwertaufnehmer auswertenden Steuereinheit, in der eine die Anregungsleistung an den Schwingungserzeuger liefernder Anregungsleistungsgenerator vorgesehen ist, dessen Anregungsleistung während des Betriebs so einstellbar ist, daß die Amplitude der Anregungsschwingung der Coriolis-Leitung einen vorgegebenen Sollwert aufweist, indem in der Steuereinheit ein die Amplitude der Anregungsschwingung als Regelgröße auf einem Sollwert haltender Regler vorgesehen ist und der Regler die Anregungsleistung des Anregungsleistungsgenerators als Stellgröße des Regelkreises beeinflußt.

Massendurchflußmeßgeräte für strömende Medien, die nach dem Coriolis-Prinzip arbeiten, sind in verschiedenen Ausführungen bekannt (vgl. die deutschen Offenlegungsschriften 26 29 833, 28 22 087, 28 33 037, 29 38 498, 30 07 361, 33 29 544, 34 43 234, 35 03 841, 35 05 166, 35 26 297, 37 07 777, 39 16 285, 40 16 207, 41 24 295, 41 43 361, 42 00 060, 43 27 052, 44 13 239, 44 17 332 und 44 17 516, die europäischen Offenlegungsschriften 0 083 144, 0 109 218, 0 119 638, 0 196 150, 0 210 308, 0 212 782, 0 232 679, 0 235 274, 0 243 468, 0 244 692, 0 271 605, 0 275 367 und 0 282 552, die französische Offenlegungsschrift 2 598 801 sowie die USA-Patentschriften 4,491,009, 4,628,744, 4,666,41, 4,803,867 und 4,962,678) und finden in zunehmendem Maße Verwendung.

Eine für alle bekannten Massendurchflußmeßgeräte gleichermaßen bedeutende Größe ist die Amplitude der Anregungsschwingung der Coriolis-Leitung. Diese Amplitude geht zwar im Gegensatz zu der Frequenz der Anregungsschwingung der Coriolis-Leitung nicht in erster Ordnung in das Meßergebnis für den Massendurchfluß durch das Massendurchflußmeßgerät ein, sondern erst in höherer Ordnung, verursacht durch nichtlineare Effekte bei der Deformation der Coriolis-Leitung während der Anregungsschwingung, dennoch sind gerade diese Effekte höherer Ordnung bei der heute geforderten Präzision einer relativen Meßgenauigkeit kleiner als 0,1 % bei einem Massendurchflußwert von 10 % bis 100 % des Nenndurchflusses bei Massendurchflußmeßgeräten, die nach dem Coriolis-Prinzip arbeiten, von besonderer Bedeutung.

Die Amplitude der Anregungsschwingung der Coriolis-Leitung ist von einer Vielzahl von Faktoren abhängig. Es sind dies zum einen die Eigenschaften des schwingungsfähigen Systems in Form der Coriolis-Leitung, ihrer unmittelbaren Umgebung und des Inhalts der Coriolis-Leitung, also des strömenden Mediums, an sich, zum zweiten die der Coriolis-Leitung von dem Schwingungserzeuger zugeführte Anregungsleistung und schließlich die Ankopplung des schwingungsfähigen Systems an die äußere Umgebung, also an das umgebende Rohrleitungssystem. Von diesen Einflußfaktoren sind die ersten beiden relativ einfach zu beherrschen, da sie vorgegeben oder bekannt sind. Die Ankopplung des schwingungsfähigen Systems "Massendurchflußmeßgerät" an das umgebende Rohrleitungssystem ist zum einen im voraus nicht bekannt, zum anderen nahezu nicht vorgebbar. Für diese Ankopplung maßgebliche Faktoren sind beispielsweise der Durchmesser und die Wandstärke der angrenzenden Rohrleitungen und auch der Abstand zwischen der Verbindung des Massendurchflußmeßgerätes zu den angrenzenden Rohrleitung von den nächsten Unterstützungspunkten der angrenzenden Rohrleitungen. Je nach Ankopplung der Coriolis-Leitung des Massendurchflußmeßgerätes an die angrenzenden Rohrleitungen geht ein mehr oder weniger großer Teil der auf die Coriolis-Leitungen wirkenden Anregungsleistung für die Anregungsschwingung verloren und verschwindet im angrenzenden Rohrleitungssystem.

Um eine ausreichende Genauigkeit des Massendurchflußmeßgerätes zu gewährleisten, ist es notwendig, daß die Amplitude der Anregungsschwingung der Coriolis-Leitung eine Mindestamplitude nicht unterschreitet, da sonst die Meßwertaufnehmer keine auswertbaren Signale mehr liefern. Damit diese Mindestamplitude der Anregungsschwingung der Coriolis-Leitung in der überwiegenden Anzahl der Montagemöglichkeiten des Massendurchflußmeßgerätes in einem Rohrleitungssystem gewährleistet ist, wird bei bekannten Massendurchflußmeßgeräten während des Herstellungsverfahrens eine relativ große Anregungsleistung vorgegeben, so daß einerseits die Amplitude der Anregungsschwingung der Coriolis-Leitung bei optimalen Einbaubedingungen deutlich über der Mindestamplitude liegt, daß andererseits aber auch bei einer nicht optimalen Einbaulage des Massendurchflußmeßgerätes eine ausreichende Amplitude der Anregungsschwingung der Coriolis-Leitung gewährleistet ist. Dabei tritt das Problem auf, daß man sich umso mehr Fehlerquellen höherer Ordnung einhandelt, je größer die Amplitude der Anregungsschwingung der Coriolis-Leitung ist.

Aus dem Stand der Technik, nämlich aus den PCT-Offenlegungsschriften 93 22 629 und 88 02 105 sowie aus den europäischen Offenlegungsschriften 0 272 758 und 0 212 782, sind solche Massendurchflußmeßgeräte bekannt, die derart ausgestaltet sind, daß die Amplitude der Anregungsschwingung der Coriolis-Leitung gemessen an den Umgebungsfaktoren stets einen möglichst optimalen Wert annimmt.

Bei diesen Massendurchflußmeßgeräten gilt, daß die Anregungsleistung des Anregungsleistungsgenerators während des Betriebes einstellbar ist. Durch diese Maßnahme ist gewährleistet, daß unabhängig vom Produktionsprozeß des Massendurchflußmeßgerätes während des Betriebes des Massendurchflußmeßgerätes ein möglichst optimaler Wert für die Amplitude der Anregungsschwingung der Coriolis-Leitung automatisch einstellbar ist. Beispielsweise kann somit bei einer optimalen Einbaulage des Massendurchflußmeßgerätes innerhalb eines Rohrleitungssystems gewährleistet werden, daß die Amplitude der Anregungsschwingung der Coriolis-Leitung tatsächlich nur der zum optimalen Betrieb der Meßwertaufnehmer notwendigen Mindestamplitude entspricht. Hierdurch ist gewährleistet, daß die bei einer zu hohen Amplitude der Anregungsschwingung der Coriolis-Leitung auftretenden Meßfehler höherer Ordnung minimiert sind und somit die Genauigkeit bei der Bestimmung des Massendurchflusses deutlich erhöht ist.

Bei allen diesen bekannten Massendurchflußmeßgeräten ist problematisch, daß für den Fall, daß eine relativ starke Kopplung zwischen den Meßrohren und dem umgebenden Rohrleitungssystem vorliegt - die Einbaugüte also gering ist, da auch störende Schwingungen des Rohrleitungssystems stark an die Meßrohre angekoppelt sind -, die Anregungsleistung einfach so lange erhöht wird, bis die Schwingungsamplitude der Meßrohre ihren Sollwert erreichen. Eine solch hohe Anregungsleistung ist problematisch, da die geringe Einbaugüte des Massendurchflußmeßgerätes im umgebenden Rohrleitungssystem unerkannt bleibt und die Meßgenauigkeit des Massendurchflußmeßgerätes negativ beeinflußt.

Der Erfindung liegt somit die Aufgabe zugrunde, das bekannte Massendurchflußmeßgerät, von dem die Erfindung ausgeht, so auszugestalten und weiterzubilden, daß einer Bedienungsperson signalisiert wird, den Einbau des Massendurchflußmeßgerätes in das umgebende Rohrleitungssystem im Hinblick auf eine möglichst hohe Meßgenauigkeit zu optimieren.

Das erfindungsgemäße Massendurchflußmeßgerät, bei dem die zuvor hergeleitete und dargelegte Aufgabe gelöst ist, ist dadurch gekennzeichnet, daß ein die Anregungsleistung als Maß für die Einbaugüte des Massendurchflußmeßgerätes anzeigendes Anzeigeelement vorgesehen ist.

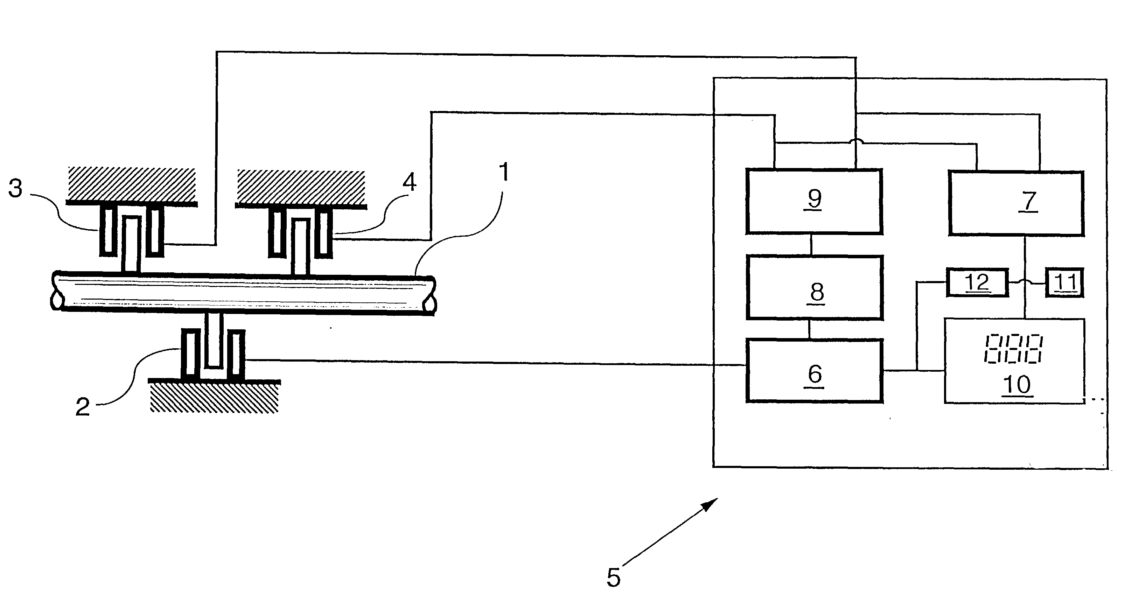

Im einzelnen gibt es nun eine Vielzahl von Möglichkeiten, das erfindungsgemäße Massendurchflußmeßgerät auszugestalten und weiterzubilden. Dazu wird verwiesen einerseits auf die dem Patentanspruch 1 nachgeordneten Patentansprüche, andererseits auf die Beschreibung eines Ausführungsbeispiels in Verbindung mit der Zeichnung. In der Zeichnung zeigt die einzige Figur den schematischen Aufbau eines bevorzugten Ausführungsbeispiels eines erfindungsgemäßen Massendurchflußmeßgerätes.

In der einzigen Figur der Zeichnung ist ein bevorzugtes Ausführungsbeispiel eines Massendurchflußmeßgerätes für strömende Medien, das nach dem Coriolis-Prinzip arbeitet, schematisch dargestellt. Dieses Massendurchflußmeßgerät weist auf eine das strömende Medium führende Coriolis-Leitung 1, einen die Coriolis-Leitung 1 anregenden Schwingungserzeuger 2, zwei auf Coriolis-Kräften beruhende Coriolis-Schwingungen erfassende Meßwertaufnehmer 3, 4 und eine den Schwingungserzeuger 2 ansteuernde und die Meßsignale der Meßwertaufnehmer 3, 4 auswertende Steuereinheit 5. Hierbei ist anzumerken, daß es denkbar ist, auf einen der Meßwertaufnehmer 3, 4 zu verzichten und statt der Signale dieses Meßwertaufnehmers 3, 4 die Signale des Schwingungserzeugers 2 der Steuereinheit 5 zur Auswertung zu übermitteln. Bei dem erfindungsgemäßen Massendurchflußmeßgerät regt der Schwingungserzeuger 2 die Coriolis-Leitung 1 mit einer Anregungsleistung an, wobei in der Steuereinheit 5 ein die Anregungsleistung an den Schwingungserzeuger 2 liefernder Anregungsleistungsgenerator 6 vorgesehen ist. Wie bei den bekannten Massendurchflußmeßgeräten werden die Meßsignale der Meßwertaufnehmer 3, 4 einem Phasendifferenzdetektor 7 in der Steuereinheit 5 zugeführt, der die dem Massendurchfluß durch die Coriolis-Leitung 1 proportionale Phasendifferenz zwischen den Meßsignalen der Meßwertaufnehmer 3, 4 bestimmt. Bei dem Massendurchflußmeßgerät ist die Anregungsleistung des Anregungsleistungsgenerators 6 während des Betriebes einstellbar.

In der Steuereinheit 5 ist ein die Amplitude der Anregungsschwingung als Regelgröße auf einem Sollwert haltender Regler 8 vorgesehen, der die Anregungsleistung des Anregungsleistungsgenerators 6 als Stellgröße des Regelkreises beeinflußt. Hierdurch wird unabhängig von allen möglichen Faktoren eine gleichbleibende Amplitude der Anregungsschwingung der Coriolis-Leitung 1 gewährleistet. Entspricht der Sollwert für die Amplitude der Anregungsschwingung der Coriolis-Leitung 1 der optimal von den Meßwertaufnehmern 3, 4 auszuwertenden Mindestamplitude, so ist durch diese Maßnahme eine konstant hohe Meßgenauigkeit für den Massendurchfluß gewährleistet.

Eine Ausgestaltung erfährt das dargestellte Ausführungsbeispiel eines erfindungsgemäßen Massendurchflußmeßgerätes dadurch, daß dem Regler 8 der Mittelwert der Amplituden der Meßsignale als Istwert zugeführt wird. Dadurch daß dem Regler 8 der Mittelwert der Amplituden der Maßsignale als Istwert zugeführt wird, wird die Genauigkeit der Messung erhöht.

Alternativ zu der zuvor beschriebenen Ausgestaltung des bevorzugten Ausführungsbeispiels erfolgt eine Weiterbildung dadurch, daß dem Regler 8 die Summe der Amplituden der Meßsignale als Istwert zugeführt wird. Hierbei wird im Vergleich zu der zuvor aufgezeigten Ausgestaltung eine Vereinfachung erreicht, da die Amplituden der Meßsignale nicht unabhängig voneinander bestimmt und anschließend gemittelt werden müssen, sondern die Amplitude der summierten Meßsignale nur einmal bestimmt werden muß.

Die Amplitude mindestens eines Meßsignals kann alternativ unmittelbar aus dem Meßsignal selbst, d. h. durch Vergleiche der Meßsignale zu verschiedenen Zeitpunkten, oder mittelbar aus einem zeitlichen Mittelwert des Meßsignals bestimmt werden, da das Meßsignal im wesentlichen einer Sinusfunktion entspricht. Die letzte Alternative zur Bestimmung der Amplitude des Meßsignals kann beispielsweise dadurch realisiert werden, daß in einem vorgegebenen Zeitintervall der Absolutwert eines jeden Meßsignals integriert wird. Die Bestimmung der Amplitude mindestens eines Meßsignals erfolgt bei dem bevorzugten Ausführungsbeispiel in einem in der Steuereinheit 5 vorgesehenen Amplitudendetektor 9.

Da im bevorzugten Ausführungsbeispiel der Anregungsleistungsgenerator 6 die Anregungsleistung nicht kontinuierlich an den Schwingungserzeuger 2 liefern muß, ist das erfindungsgemäße Massendurchflußmeßgerät bevorzugt dadurch ausgestaltet, daß der Regler 8 den zeitlichen Mittelwert der vom Anregungsleistungsgenerator 6 gelieferten Anregungsleistung beeinflußt.

Eine besonders bevorzugte Ausgestaltung erfährt das in der Figur dargestellte bevorzugte Ausführungsbeispiel eines erfindungsgemäßen Massendurchflußmeßgerätes dadurch, daß der Anregungsleistungsgenerator 6 pulsbreitengesteuerte Leistungspulse an den Schwingungserzeuger 2 liefert. Hierdurch ist eine besonders einfache Beeinflussung der Anregungsleistung gewährleistet.

Das erfindungsgemäße Massendurchflußmeßgeräte ist dadurch gekennzeichnet, daß ein die Anregungsleistung als Maß für die Einbaugüte des Massendurchflußmeßgerätes anzeigendes Anzeigeelement 10 vorgesehen ist. Die für den erwünschten hochpräzisen Betrieb des Massendurchflußmeßgerätes notwendige Anregungsleistung ist ein Maß für die Einbaugüte. Ist beispielsweise die Anregungsleistung relativ niedrig, so ist die Ankopplung des Massendurchflußmeßgerätes an das umgebende Rohrleitungssystem ebenfalls niedrig. Von besonderem Vorteil ist die Anzeige der für einen hochpräzisen Betrieb notwendigen Anregungsleistung deshalb, weil die Ankopplung des Massendurchflußmeßgerätes an das umgebende Rohrleitungssystem bei den bekannten Massendurchflußmeßgeräten nicht nur die Amplitude der Anregungsschwingung der Coriolis-Leitung 1 beeinflußt, sondern weil eine erhöhte Ankopplung ebenfalls für ein erhöhtes Einstreuen von in dem angrenzenden Rohrleitungssystem vorhandenen Schwingungen in das Massendurchflußmeßgerät verantwortlich ist, wobei diese Einstreuungen die Messungen der Phasendifferenz zwischen den Meßsignalen der Meßwertaufnehmer 3, 4 erheblich beeinträchtigen können. Zeigt also das Anzeigeelement 10 eine hohe Anregungsleistung an, so ist dies für die Bedienungsperson ein Hinweis darauf, daß der Einbau zu optimieren ist, um eine mit den Spezifikationen des Massendurchflußmeßgerätes übereinstimmende Meßgenauigkeit zu erhalten. In dem in der Figur dargestellten bevorzugten Ausführungsbeispiel dient das Anzeigeelement 10 neben der Anzeige der Anregungsleistung ebenfalls zur Anzeige des Massendurchflusses, der sich aus der im Phasendifferenzdetektor 7 bestimmten Phasendifferenz ergibt. Selbstverständlich kann zur Anzeige der Anregungsleistung ein separates Anzeigeelement vorgesehen sein.

Schließlich kann das in der Figur dargestellte bevorzugte Ausführungsbeispiel eines erfindungsgemäßen Massendurchflußmeßgerätes dadurch verbessert werden, daß in der Steuereinheit 5 ein bei Überschreiten einer vorgegebenen maximalen Anregungsleistung ein Warnsignal über ein Warnanzeigeelement 11 ausgebender Schwellwertkomparator 12 vorgesehen ist. Über diesen Schwellwertkomparator 12 und das Warnanzeigeelement 11 wird der Bedienungsperson signalisiert, daß sich die Anregungsleistung in einem Bereich befindet, der darauf hindeutet, daß der Einbau des Massendurchflußmeßgerätes zu optimieren ist. Das Warnanzeigeelement 11 kann selbstverständlich alternativ im Anzeigeelement 10 integriert sein.

## Patentansprüche

1. Massendurchflußmeßgerät für strömende Medien, das nach dem Coriolis-Prinzip arbeitet, mit mindestens einer das strömende Medium führenden Coriolis-Leitung (1), mit mindestens einem die Coriolis-Leitung (1) mit einer Anregungsleistung anregenden Schwingungserzeuger (2), mit mindestens zwei auf Coriolis-Kräften beruhende Coriolis-Schwingungen erfassenden Meßwertaufnehmern (3, 4) und mit einer den Schwingungserzeuger (2) ansteuernden und die Meßsignale der Meßwertaufnehmer (3, 4) auswertenden Steuereinheit (5), in der ein die Anregungsleistung an den Schwingungerzeuger (2) liefernder Anregungsleistungsgenerator (6) vorhanden ist, dessen Anregungsleistung während des Betriebes so einstellbar ist, daß die Amplitude der Anregungsschwingung der Coriolis-Leitung (1) einen vorgegebenen Sollwert aufweist, indem in der Steuereinheit (5) ein die Amplitude der Anregungsschwingung als Regelgröße auf einem Sollwert haltender Regler (8) vorgesehen ist und der Regler (8) die Anregungsleistung des Anregungsleistungsgenerators (6) als Stellgröße des Regelkreises beeinflußt, **dadurch gekennzeichnet, daß** ein die Anregungsleistung als Maß für die Einbaugüte des Massendurchflußmeßgerätes anzeigendes Anzeigeelement (10) vorhanden ist.

2. Massendurchflußmeßgerät nach Anspruch 1, **dadurch gekennzeichnet, daß** dem Regler (8) der Mittelwert der Amplituden der Meßsignale als Istwert zugeführt wird.

3. Massendurchflußmeßgerät nach Anspruch 1, **dadurch gekennzeichnet, daß** dem Regler (8) die Summe der Amplituden der Meßsignale als Istwert zugeführt wird.

4. Massendurchflußmeßgerät nach einem der Ansprüche 1 bis 3, **dadurch gekennzeichnet, daß** der Regler (8) den zeitlichen Mittelwert der vom Anregungsleistungsgenerator (6) gelieferten Anregungsleistung beeinflußt.

5. Massendurchflußmeßgerät nach Anspruch 4, **dadurch gekennzeichnet, daß** der Anregungsleistungsgenerator (6) pulsbreitengesteuerte Leistungspulse an den Schwingungserzeuger (2) liefert.

6. Massendurchflußmeßgerät nach einem der Ansprüche 1 bis 5, **dadurch gekennzeichnet, daß** in der Steuereinheit (5) ein beim Überschreiten einer vorgegebenen maximalen Anregungsleistung ein Warnsignal über ein Warnanzeigeelement (11) ausgebender Schwellwertkomparator (12) vorgesehen ist.

## Claims

1. A mass flow meter for flowing media that works on the Coriolis Principle, with at least one Coriolis line (1) carrying the flowing medium, at least one oscillator (2) exciting the Coriolis line (1), at least two transducers (3, 4) detecting Coriolis vibrations based on Coriolis forces and a control unit (5) controlling the oscillator (2) and evaluating the measurement signals of the transducers (3, 4) wherein the oscillator (2) excites the Coriolis line (1) with an excitation power, wherein a generator (6) supplying the excitation power to the oscillator (2) is provided and wherein the excitation power of the generator (6) is adjustable during operation of the flow meter so that the amplitude of the excitation power of the Coriolis line (1) has a pre-determined desired value, wherein in the control unit (5), there is a controller (8) holding the amplitude of the excitation oscillation as a control variable at a desired value, and the controller (8) influences the excitation power of the generator (6) as a correcting variable of the control circuit **characterized in that** said flow meter has a display element (10) that displays the excitation power as a measurement of the installation quality of the mass flow meter.

2. The mass flow meter according to Claim 1, **characterized in that** at the average of the amplitudes of the measured signals is fed to the controller (8) as an actual value.

3. The mass flow meter according to Claim 1, **characterized in that** the sum of the amplitudes of the measured signals is fed to the controller (8) as an actual value.

4. The mass flow meter according to Claims 1 to 3 **characterized in that** the controller (8) influences the average over time of the excitation power supplied by the generator (6).

5. The mass flow meter according to Claim 5, **characterized in that** the generator (6) supplies pulse-width-controlled power pulses to the oscillator (2).

6. The mass flow meter according to one of Claims 1 to 5, **characterized in that** the control unit (5) has a threshold comparator (12) that gives a warning signal via a warning-display element (11) when a predetermined maximum excitation power is exceeded.

## Revendications

1. Débitmètre massique pour des fluides en écoulement qui fonctionne selon le principe de Coriolis, avec au moins une conduite de Coriolis (1) transportant le fluide en écoulement, avec au moins un générateur d'oscillations (2) excitant la conduite de Coriolis (1) avec une puissance d'excitation, avec au moins deux transducteurs (3, 4) recensant des oscillations de Coriolis qui s'appuient sur des forces de Coriolis et avec une unité de commande (5) pour piloter le générateur d'oscillations (2) et analyser les signaux de mesure délivrés par les transducteurs (3, 4) dans laquelle est disposé un générateur de puissance d'excitation (6) fournissant la puissance d'excitation au générateur d'oscillations (2), laquelle peut être réglée pendant le fonctionnement de sorte que l'amplitude de l'oscillation d'excitation de la conduite de Coriolis (1) présente une valeur de consigne prédéfinie, ce réglage s'effectuant en ce qu'on prévoit dans l'unité de commande (5) un régulateur (8) maintenant sur une valeur de consigne l'amplitude de l'oscillation d'excitation qui sert de variable commandée et en ce que le régulateur (8) influe sur la puissance d'excitation du générateur de puissance d'excitation (6) , laquelle sert de variable réglante pour le circuit régulateur, **caractérisé en ce qu'**est présent un élément de visualisation (10) affichant la puissance d'excitation comme grandeur indicative de la qualité du montage du débitmètre massique.

2. Débitmètre massique selon la revendication 1 **caractérisé en ce que** la valeur moyenne des amplitudes des signaux de mesure est envoyée comme valeur effective au régulateur (8).

3. Débitmètre massique selon la revendication 1 **caractérisé en ce que** la somme des amplitudes des signaux de mesure est envoyée comme valeur effective au régulateur (8).

4. Débitmètre massique selon l'une des revendications 1 à 3 **caractérisé en ce que** le régulateur (8) influe sur la valeur moyenne temporelle de la puissance d'excitation fournie par le générateur de puissance d'excitation (6).

5. Débitmètre massique selon la revendication 4 **caractérisé en ce que** le générateur de puissance d'excitation (6) fournit au générateur d'oscillations (2) des impulsions de puissance réglées par durée d'impulsion.

6. Débitmètre massique selon l'une des revendications 1 à 5 **caractérisé en ce qu'**on prévoit dans l'unité de commande (5) un comparateur de seuils (12) émettant un signal d'avertissement par l'intermédiaire d'un élément témoin (11) en cas de dépassement d'une puissance d'excitation maximale prédéfinie.
